# EUROPEAN PATENT APPLICATION

(11) **EP 4 653 322 A1**
(43) Date of publication of application: **26.11.2025**
(21) Application number: 25171972.0
(22) Date of filing: 23.04.2025
(51) Int. Cl.: B64D 37/30, B64D 37/32, F02C 3/22

(54) **HYDROGEN FUELLED AIRCRAFT PROPULSION SYSTEM OPERATING METHOD**

(30) Priority: 21.05.2024 GB 202407186
(71) Applicant: Rolls-Royce plc, London N1 9FX (GB)
(72) Inventor: Gale, Louise, Derby, DE24 8BJ (GB); Palmer, Chloe Jo, Derby, DE24 8BJ (GB); Glover, Neil, Derby, DE24 8BJ (GB); Biquet, Chiara, Derby, DE24 8BJ (GB)
(74) Representative: Rolls-Royce plc

(57) **Abstract**

A method of operating a fuel system (18) of a hydrogen fuelled aircraft propulsion system (20) comprises exposing one or more fuel system components (12, 26, 34, 36, 38, 40, 48, 50, 52, 54) to a hydrogen embrittlement inhibiting gas comprising one of oxygen and carbon monoxide at a concentration above an embrittlement inhibition concentration.

## Description

### TECHNICAL FIELD

This disclosure relates to a method of operating a hydrogen fuelled aircraft propulsion system.

### BACKGROUND

In order to limit emissions of carbon dioxide, use of hydrogen stored as a liquid as an alternative to conventional hydrocarbon fuel in aircraft gas turbine engines has been proposed. High-pressure, low-temperature gaseous storage has also been considered. However, exposure of certain materials to hydrogen can result in "hydrogen embrittlement", which may reduce the performance of components over time. The present disclosure seeks to address this.

### SUMMARY

In a first aspect there is provided a method of operating a fuel system of a hydrogen fuelled aircraft propulsion system, the method comprising:
exposing one or more fuel system components to a hydrogen embrittlement inhibiting gas comprising one of oxygen and carbon monoxide at a concentration above an embrittlement inhibition concentration.

It has been found that exposing components in the propulsion system to oxygen or carbon monoxide at suitable concentrations can greatly reduce the rate at which hydrogen penetrates the material, leading to reduced embrittlement. Accordingly, a wider range of materials can be selected from for the propulsion system. Alternatively, or in addition, longer component life, lighter component weight or greater component performance can be realised.

The hydrogen embrittlement inhibiting gas may comprise air.

Where the hydrogen embrittlement inhibiting gas comprises oxygen, the embrittlement inhibition concentration may be at least 5 volumetric parts per million (vppm).

Where the hydrogen embrittlement inhibiting gas comprises oxygen, the oxygen may be provided at a concentration below a flammability limit. The flammability limit may be 0.8% by volume.

Where the hydrogen embrittlement inhibiting gas comprises carbon monoxide, the embrittlement inhibition concentration may be at least 100 volumetric parts per million (vppm).

The method may comprise heating hydrogen fuel within the fuel system to a temperature above a hydrogen embrittlement inhibiting gas liquefaction temperature and introducing the hydrogen embrittlement inhibiting gas to the heated hydrogen fuel.

The fuel system may comprise a fuel pump, fuel filter, fuel tank, fuel buffer tank, fuel pipe, fuel valve, heat exchanger, fuel injector or fuel heater of the fuel system.

The fuel system may comprise one or more component comprising one or more of a steel such as stainless steel, low-carbon steel or high-strength pipeline steel, a nickel alloy, aluminium metal, or an aluminium alloy.

According to a second aspect there is provided an aircraft propulsion system comprising a fuel system configured to provide hydrogen fuel and an embrittlement inhibiting gas system configured to an embrittlement inhibiting gas comprising one of oxygen and carbon monoxide to a fuel line of the fuel system at a concentration sufficient to inhibit embrittlement of at least one component of the fuel system.

The aircraft propulsion system may comprise a gas turbine engine. The gas turbine engine may comprise a compressor and a bleed line configured to provide compressor bleed air to inhibit embrittlement of at least one component of the fuel system.

### BRIEF DESCRIPTION OF THE DRAWINGS

An embodiment will now be described by way of example only with reference to the accompanying drawings, which are purely schematic and not to scale, and in which:
Figure 1 shows a first cryogenic-fuelled airliner comprising a propulsion system comprising cryogenic-fuelled turbofan engines;
Figure 2 is a functional block diagram showing a fuel system for the propulsion system of figure 1;
Figure 3 is a functional block diagram showing a part of the fuel system of figure 2; and
Figure 4 is a functional block diagram showing an alternative fuel system for the propulsion system of figure 1.

### DETAILED DESCRIPTION

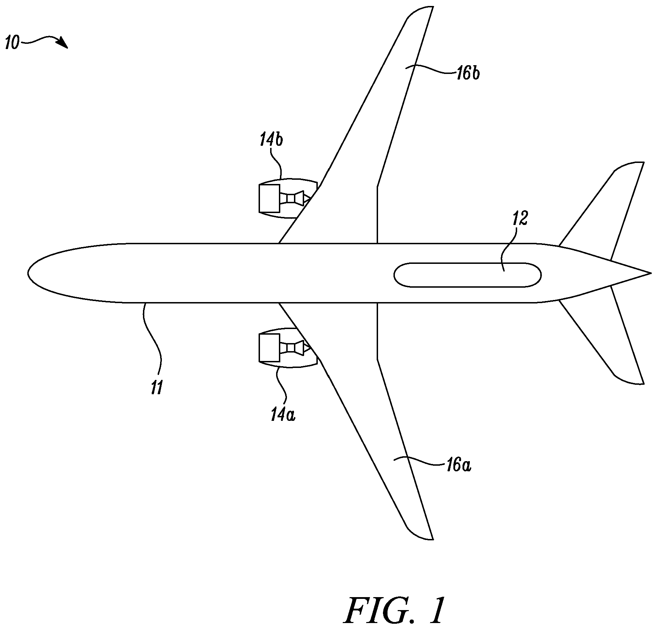

A hydrogen-fuelled airliner is illustrated in Figure 1. In this example, the airliner 10 is of substantially conventional tube-and-wing twinjet configuration with a central fuselage 11 and substantially identical first and second turbofan engines 14 mounted underneath respective wings 16.

A fuel storage tank 12 is located in the fuselage 102. The hydrogen fuel storage tank 12 is typically arranged to store liquid hydrogen or may be configured to store compressed gaseous or supercritical hydrogen. Typically, the hydrogen is stored at a temperature below ambient (20°C, 293K).

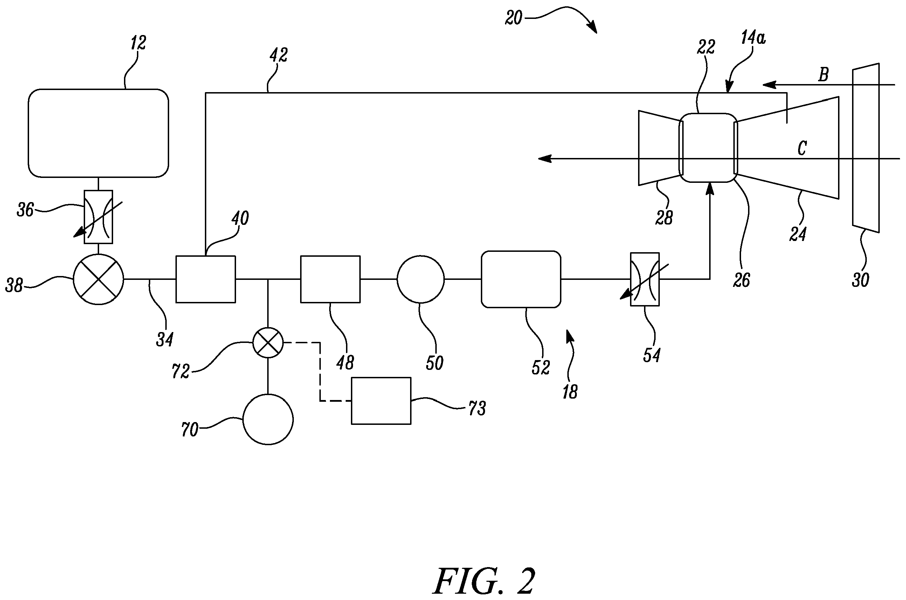

The engines 14a, 14b, fuel tank 12, and a fuel system 18 form a propulsion system 20. A functional block diagram of the propulsion system 20 is shown in figure 2. As will be understood, the propulsion system 20 is suitable for use with the aircraft of figure 1 and may be suitable for use with other aircraft configurations, such as blended wing body types.

The engines 14a, 14b are in the form of gas turbine engines (only one of which, 14a is shown in figure 2 for simplicity) each comprising a core gas turbine 22.

The core gas turbine 22 comprises, in fluid flow series, a compressor 24, a combustor 26 and a turbine 28. The turbine 28 and compressor 24 are interconnected by a shaft (not shown). It will be appreciated that in alternative embodiments, the core gas turbine could be of two-shaft or three-shaft configuration, and / or could comprise a reduction gearbox. For example, the gas turbine engine could comprise separate low and high-pressure compressors and turbines interconnected by respective low and high-pressure shafts. The turbine 28 (or in some embodiments, a separate fan-drive turbine) drives a fan 30. Inlet air A is ingested by the fan 30, which provides a core airflow C to the gas turbine engine core 22, and a bypass airflow B, which bypasses the core 22, and provides thrust via a bypass nozzle (not shown).

As shown in figure 2, the hydrogen fuel tank is associated with a combustor 26 of the gas turbine engines 14a, 14b via a respective hydrogen fuel line 34.

At least fuel pumping and control equipment is associated with the fuel line 34.

Immediately downstream of the hydrogen fuel tank 12 is a fuel shut-off valve 36 which controls flow from the tank 12 to the fuel line 34. A pump 38 is then provided in the fuel line 34 downstream of the shut-off valve 36, to pressurise and drive flow through the fuel line 34.

A fuel heater 40 is provided downstream in hydrogen fuel flow of the hydrogen pump 38 in the fuel line 34. The fuel heater 40 is configured to warm the hydrogen fuel in the hydrogen fuel line 34, to thereby vaporise it from a liquid phase to a gaseous or supercritical phase. Where the hydrogen is stored as a gas or supercritical fluid, the heater 40 may be omitted, or may be configured to warm the hydrogen fuel without an associated phase change. Typically, where the hydrogen fuel is stored as a liquid, the heater 40 is configured to warm the fuel from a temperature below its critical temperature of approximately 33 Kelvin, to a temperature suitable for combustion, for example above 100 Kelvin.

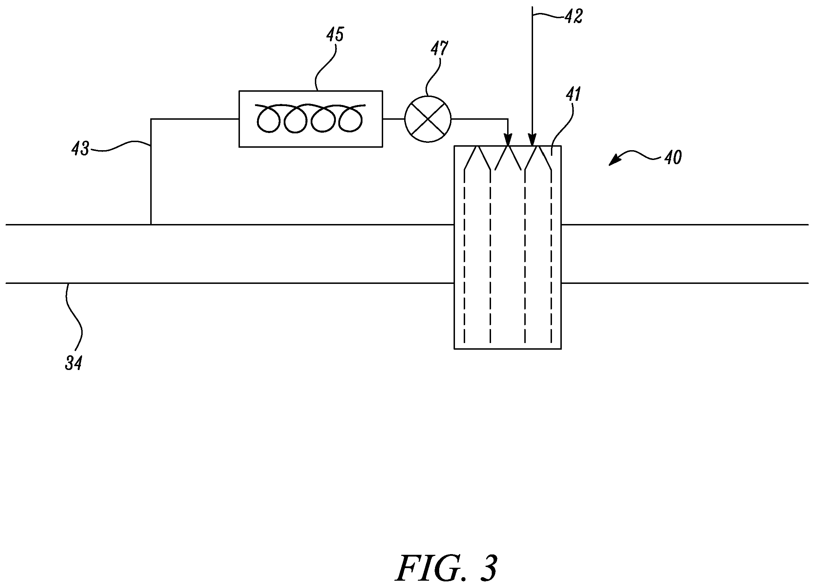

Figure 3 shows the heater in more detail. The heater 40 comprises an auxiliary combustor 41 configured to combust a portion of hydrogen fuel tapped off from the main hydrogen fuel line 34 via an auxiliary combustor fuel line 43. The auxiliary combustor 40 is also provided with high-pressure air for combustion from a bleed line 42 from the compressor 24 of one of the gas turbine engines 14a, 14b. An auxiliary heater 45 and valve 47 are provided in the auxiliary combustor fuel line 43 to control fuel temperature and flow respectively into the auxiliary combustor 41. Heat between combustion products in the combustor 41 and fuel in the fuel line 34 is exchanged via a heat exchanger, such that, in this embodiment, the fuel is typically warmed without coming into contact with the combustion products.

In alternative configurations, the heater 40 may comprise an electric heater or an engine exhaust heat driven recuperator.

It has been found that prolonged exposure to hydrogen can cause mechanical damage to certain materials through a process called "hydrogen embrittlement". Hydrogen embrittlement is caused by the penetration of hydrogen into the material causing a loss in ductility and tensile strength (i.e., it becomes brittle). Consequently, hydrogen embrittlement may result in a reduction in fatigue life.

Materials susceptible to hydrogen embrittlement include most steels, nickel alloys, titanium, and some aluminium alloys. Unfortunately, such materials are of high importance in aircraft propulsion systems in view of their high strength to weight ratios, resistance to corrosion, and long fatigue lives. The avoidance of the use of such materials to avoid hydrogen embrittlement may lead to reduced propulsion system performance. On the other hand, embrittlement may also cause reduced performance over time, and so may increase maintenance requirements.

Accordingly, referring now again to figure 2, an embrittlement inhibiting gas tank 70 is provided downstream in fuel flow of the heater 40, and upstream of various fuel system components. The embrittlement gas tank contains a pressurised embrittlement inhibiting gas comprising one of oxygen (or an oxygen containing gas such as air), and carbon monoxide. A valve 72 is provided, which is arranged to control flow between the tank 70 and fuel line 34.

The gas tank 70 and valve 72 are configured to provide a flow of hydrogen embrittlement inhibiting gas sufficient to inhibit embrittlement of fuel components, but insufficient to pose a fire risk within the fuel system.

For example, where the hydrogen embrittlement inhibiting gas consists of oxygen, the valve 72 controls flow such that an oxygen content in the fuel within the fuel line 34 is at least 5 volumetric parts per million, but less than a flammability limit of 0.8% by volume. This corresponds to 4% air by volume.

In another example, where the hydrogen embrittlement inhibiting gas comprises carbon monoxide, the valve 72 controls flow such that a carbon monoxide content in the fuel within the fuel line 34 is at least 100 volumetric parts per million. Advantageously, carbon monoxide represents a lower flammability hazard than oxygen, but a larger volume of gas must be stored to provide embrittlement inhibition.

The valve 72 may be controlled by a controller 73, which controls the valve to control embrittlement inhibiting gas content in accordance with one or more sensors. For example, the controller 73 may be configured to control inhibiting gas flow rate in accordance with sensed or calculate fuel mass flow rate within the fuel line 34 using for example one or more flow and pressure sensors. Alternatively, flow may be calculated in accordance with set-point demand. The valve 72 and tank 70 may be configured such that, during operation, a maximum flow rate with the valve fully open corresponds to a mass flowrate below a flammability limit, such that, in the event of a failure leaving the valve fully open, a flammable mixture does not occur within the fuel line 34.

The embrittlement inhibiting gas may be provided during substantially all engine running, and when hydrogen gas is present in the fuel system during a shut-down. Alternatively, the inhibiting gas may be provided intermittently as required.

Downstream in hydrogen fuel flow of the heater 40 and the valve 72 are one or more optional further components. In this embodiment, a heat exchanger 48 is provided. In this example, the heat exchanger comprises an oil cooler configured to exchange heat between engine oil from the engines 14a, 14b and hydrogen fuel, to thereby heat hydrogen fuel further and cool engine oil.

One or more filters 50 are also provided. These may be necessary to filter contaminants such as ice or other solid particles or liquid from the fuel stream.

A gaseous hydrogen fuel buffer tank 52 is also provided in the hydrogen fuel line 34 and is typically installed downstream of the filter 50. The buffer tank 50 is configured to store high-pressure gaseous hydrogen for delivery to the combustor 26. The buffer tank 52 allows for relatively constant flow pressure and mass flow rates to the combustor 26 during operation, despite varying pressure and mass-flow rates from the pump 38, and varying demand from the combustor 26.

Finally, the hydrogen fuel line 34 comprises a Fuel Management Unit (FMU) in the form of a throttle valve 54 configured to control the mass-flow and pressure of gaseous hydrogen fuel delivered to the engine 14a, 14b.

Accordingly, components downstream of the valve 72 are protected from hydrogen embrittlement by the embrittlement inhibiting gas. By providing the embrittlement inhibiting gas downstream of the heater 40, the low storage temperatures of the hydrogen fuel are avoided, which enables the inhibiting gas and fuel to mix in a gaseous state.

In an alternative example, hydrogen inhibiting gas comprising air can be provided from the gas turbine engine itself.

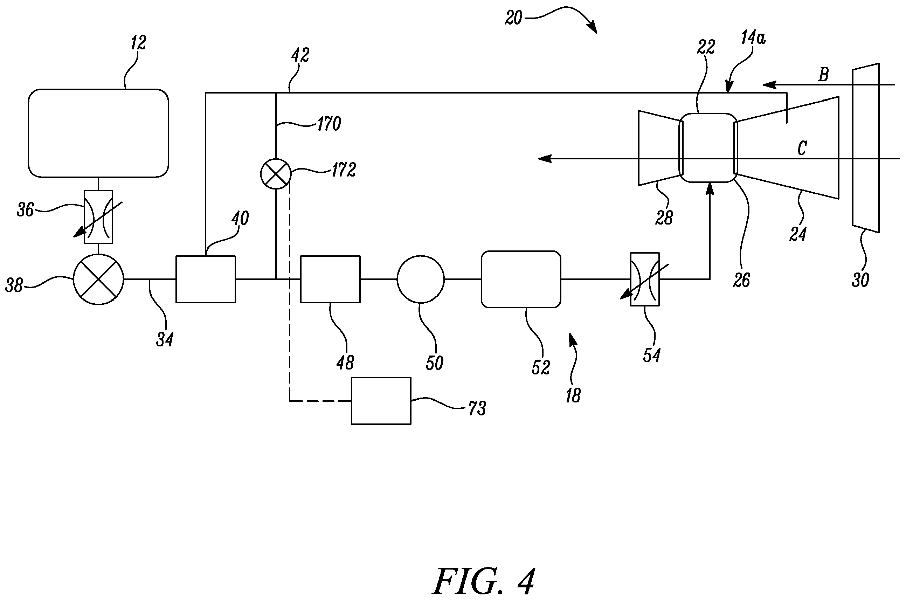

Figure 4 illustrates an alternative embodiment of the fuel system. In this embodiment, the embrittlement inhibiting gas tank is omitted, and replaced by a bleed air-line offtake, which directs a portion of the bleed air from the core gas turbine engine compressor 24 into the fuel line 34 via a valve 172 at a location downstream of the fuel heater 40. Accordingly, a small flow of oxygen containing gas turbine engine compressor air can be injected directly into the fuel flow, to provide embrittlement inhibition. Again, flows are maintained at levels above that required to inhibit embrittlement (e.g., 25 volumetric parts per million), but below the flammability limit. Accordingly, a steady supply of inhibiting gas is provided while the engine is running. Again, by providing the oxygen supply downstream of the heater, liquid oxygen and nitrogen are avoided.

In a further example (not shown), the embrittlement inhibiting gas tank could be replaced with an oxygen generator such as a chemical oxygen generator, or a permeable membrane oxygen-concentrator. Similarly, the inhibiting gas tank could be replaced by a metal-organic framework configured to capture, store and release oxygen as required.

A suitable, concentration to provide the embrittlement inhibition effect will depend on the materials utilised in the components 34, 36, 38, 40, 50, 52, 54. In one example, one or more component comprises stainless steel. Stainless steel may be utilised in particular for the fuel line 34, as well as housings for the valves 36, 54, pump 38, heater 40, filter 50 and buffer tank 52. Suitable stainless steel includes 316L, as defined in Aerospace Material Specifications standards AMS 5653 or AMS5507.

Suitable oxygen concentrations for embrittlement inhibition of stainless steel is in the range of 5 volumetric parts per million and 800 volumetric parts per million.

Similar oxygen concentrations apply in the case of nickel alloys. Nickel alloys are typically employed in high-temperature components such as the turbine 28 but may also be used in lower temperature components such as those found in the fuel system in view of its low susceptibility to corrosion. However, such materials may have a relatively high susceptibility to hydrogen embrittlement. In one example, hydrogen embrittlement inhibition was found with the provision of 0.0011 MPa partial pressure of oxygen in a 1.1 MPa hydrogen environment.

In a further example, the fuel system may comprise aluminium metal or one or more aluminium alloy. One or more components of the engine core may also comprise aluminium alloys. For example, at least a part of the turbine 28 may comprise aluminium alloy, such as titanium aluminide.

Various examples have been described, each of which comprise various combinations of features. It will be appreciated by those skilled in the art that, except where clearly mutually exclusive, any of the features may be employed separately or in combination with any other features and thus the disclosed subject-matter extends to and includes all such combinations and sub-combinations of the or more features described herein.

Modifications could be made to the disclosed embodiment. For example, the gas turbine engine could be of a different type and could for instance comprise more or fewer compressor and turbines, and could drive a fan, propeller, electrical generator, or other equipment.

## Claims

1. A method of operating a fuel system (18) of a hydrogen fuelled aircraft propulsion system (20), the method comprising:
exposing one or more fuel system components (12, 26, 34, 36, 38, 40, 48, 50, 52, 54) to a hydrogen embrittlement inhibiting gas comprising one of oxygen and carbon monoxide at a concentration above an embrittlement inhibition concentration.

2. A method according to claim 1, wherein the hydrogen embrittlement inhibiting gas comprises air.

3. A method according to claim 1 or claim 2, wherein where the hydrogen embrittlement inhibiting gas comprises oxygen, the embrittlement inhibition concentration is at least 5 volumetric parts per million (vppm).

4. A method according to any of the preceding claims, wherein where the hydrogen embrittlement inhibiting gas comprises oxygen, the oxygen is provided at a concentration below a flammability limit.

5. A method according to claim 4, wherein the flammability limit is 0.8% by volume.

6. A method according to claim 1, wherein where the hydrogen embrittlement inhibiting gas comprises carbon monoxide, the embrittlement inhibition concentration is at least 100 volumetric parts per million (vppm).

7. A method according to any of the preceding claims comprising heating hydrogen fuel within the fuel system (18) to a temperature above a hydrogen embrittlement inhibiting gas liquefaction temperature and introducing the hydrogen embrittlement inhibiting gas to the heated hydrogen fuel.

8. A method according to any of the preceding claims, wherein the fuel system (18) comprises a fuel pump (38), fuel filter (50), fuel tank (12), fuel buffer tank (52), fuel pipe (34), fuel valve (36, 54), heat exchanger (48), fuel injector (26) or fuel heater of the fuel system (40).

9. A method according to any of the preceding claims, wherein fuel system comprises one or more component comprising one or more of a steel such as stainless steel, low-carbon steel or high-strength pipeline steel, a nickel alloy, aluminium metal or an aluminium alloy.

10. An aircraft propulsion system (20) comprising a fuel system (18) configured to provide hydrogen fuel and an embrittlement inhibiting gas system configured to an embrittlement inhibiting gas comprising one of oxygen and carbon monoxide to a fuel line (34) of the fuel system at a concentration sufficient to inhibit embrittlement of at least one component of the fuel system.

11. An aircraft propulsion system according to claim 1 further comprising a gas turbine engine (14, 14b).

12. An aircraft propulsion system according to claim 11, wherein the gas turbine engine (14a, 14b) comprises a compressor (24) and a bleed line (42) configured to provide compressor bleed air to inhibit embrittlement of at least one component of the fuel system (18).
